# EUROPÄISCHE PATENTSCHRIFT

(11) **EP 0 590 123 B1**
(45) Veröffentlichungstag und Bekanntmachung des Hinweises auf die Patenterteilung: **27.12.1995**
(21) Anmeldenummer: 93907861.4
(22) Anmeldetag: 31.03.1993
(51) Int. Cl.: B62D 55/084, E02F 9/02, B60B 35/10

(54) **SPURBREITENVERÄNDERLICHES FAHRWERK**
VARIABLE GAUGE RUNNING GEAR
MECANISME DE ROULEMENT A ECARTEMENT VARIABLE

(30) Priorität: 31.03.1992 DE 4210532
(43) Veröffentlichungstag der Anmeldung: 06.04.1994
(73) Patentinhaber: NOBAS GmbH, D-5500 Nordhausen (DE)
(72) Erfinder: MEISSNER, Wolfgang, D-5500 Nordhausen (DE); DROBNER, Alfons, D-5500 Nordhausen (DE); REINBRECHT, Hans, D-5500 Nordhausen (DE); FRIEDRICH, Uwe, D-4711 Berga (DE)
(74) Vertreter: Rehberg, Elmar, Dipl.-Ing.
(86) Internationale Anmeldenummer: EP9300777
(87) Internationale Veröffentlichungsnummer: WO9319974

(56) Entgegenhaltungen:
- WO-A-89/03336
- DE-A- 3 706 931
- US-A- 3 700 115

## Beschreibung

Die Erfindung bezieht sich auf ein spurbreitenveränderliches Fahrwerk mit einem Hauptrahmen sowie zwei, jeweils über Parallelogrammlenker seitlich an dem Hauptrahmen gelagerten und seitwärts Verschwenkbaren Hilfsrahmen, wobei zum Verschwenken der Hilfsrahmen eine hydraulische Betätigungsvorrichtung vorgesehen ist, die jeweils über eine Koppel auf die Hilfsrahmen einwirkt. Insbesondere bei Baumaschinen besteht einerseits der Wunsch nach Fahrwerken mit großen Spurbreiten, um eine hohe Standsicherheit zu erreichen. Andererseits stehen große Spurbreiten der Mobilität der Baumaschinen entgegen. Sowohl beim Transport mit der Bahn als auch auf der Straße müssen Höchstbreiten eingehalten werden, mit denen sich eine ausreichende Standsicherheit oft nicht erreichen läßt. Um kurze Baustellenwechsel zu realisieren, ist es daher notwendig, für die Baumaschinen eine Spurbreitenveränderungsmöglichkeit zu schaffen. Ein entsprechendes Fahrwerk kann jedoch auch in anderen Bereichen Verwendung finden. Es ist auch nicht auf eine bestimmte Antriebsart wie beispielsweise den bei Baumaschinen gebräuchlichen Raupenbandantrieb beschränkt.

Ein Spurbreitenveränderliches Fahrwerk der eingangs beschriebenen Art ist aus der DE-A-22 16 307 bekannt. Dieses Fahrwerk ist insbesondere für eine Pistenraupe, die mit verschieden breiten Raupenbändern ausrüstbar ist, vorgesehen. Zwischen jedem Hilfsrahmen und dem Hauptrahmen sind jeweils zwei Parallelogrammlenker und ein Fixierlenker vorgesehen. Der Fixierlenker ist um dieselbe vertikale Achse an dem jeweiligen Hilfsrahmen verschwenkbar, wie einer der Parallelogrammlenker. An dem Hauptrahmen sind für den Fixierlenker verschiedene Lagerungsmöglichkeiten vorgesehen, die jeweils einer Spurbreite entsprechen. Zur automatischen und kontinuierlichen Verstellung der Spurbreite wird in der DE-A-22 16 307 vorgeschlagen, an dem Hauptrahmen für jeden Fixierlenker jeweils nur ein Schwenklager vorzusehen, das hydraulisch in Längsrichtung verschiebbar ist. Die Fixierlenker dienen so als Koppeln zwischen der hydraulischen Betätigungsvorrichtung und dem Hilfsrahmen. Als nachteilig stellt sich bei dem bekannten spurbreitenveränderlichen Fahrwerk der konstruktive Aufwand für die beiden in Längsrichtung hydraulisch verschiebbaren Schwenklager der Fixierlenker heraus. Weiterhin macht sich negativ bemerkbar, daß die hydraulische Betätigungsvorrichtung zum Verschwenken der Hilfsrahmen in allen Spurbreiteneinstellungen durch äußere, an den Hilfsrahmen insbesondere in Fahrtrichtung angreifende Kräfte beaufschlagt wird. Die Fixierlenker sind in allen Spurbreiteneinstellungen so ausgerichtet, daß sie eine Erstreckungskomponente in Längsrichtung aufweisen. Die Parallelogrammlenker sind in einer Arbeitsstellung des Fahrwerks mit maximaler Spurbreite senkrecht zur Längsmittelebene des Fahrwerks orientiert. Des weiteren sind neben den Fixierlenkern auch keine weiteren, die Lage der Hilfsrahmen gegenüber dem Hauptrahmen definierenden Einrichtungen vorgesehen.

Aus der DE-A-22 37 045 ist ein spurbreitenveränderliches Fahrwerk für einen Kranwagen, Tankwagen o. dgl. bekannt. Dieses Fahrwerk weist einen Hauptrahmen sowie zwei, jeweils über Parallelogrammlenker seitlich an dem Hauptrahmen gelagerte und seitwärts verschwenkbare Hilfsrahmen auf, wobei jedoch keine Betätigungsvorrichtung zum Verschwenken der Hilfsrahmen vorgesehen ist. Zum Fixieren der Hilfsrahmen in einer inneren Stellung sind Anschläge zwischen dem Hauptrahmen und den Hilfsrahmen sowie ein die Hilfsrahmen miteinander verbindendes Verbindungsstück vorgesehen. In einer Arbeitsstellung der Hilfsrahmen wird deren Lage jeweils über etwa diagonal zwischen dem Parallelogrammlenkern angeordnete Fixierlenker definiert. Hierbei sind die Parallelogrammlenker senkrecht zur Längsmittelebene des Fahrwerks ausgerichtet. Grundlegender Nachteil dieses bekannten Fahrwerks ist natürlich, daß keinerlei Betätigungseinrichtung für das Verschwenken der Hilfsrahmen gegenüber dem Hauptrahmen vorgesehen sind. Vielmehr muß das Ausschwenken der Hilfsrahmen durch eine Folge von Antriebsbewegungen hervorgerufen werden.

Aus der DE-A-34 42 319 ist ein spurbreitenveränderliches Fahrwerk bekannt, bei dem ebenfalls Hilfsrahmen über Parallelogrammlenker schwenkbar an einem Hauptrahmen gelagert sind. Eine Betätigungsvorrichtung zum Verschwenken der Hilfsrahmen ist nicht vorgesehen. Die Fixierung der Hilfsrahmen in einer inneren Stellung erfolgt durch Arretierung der Parallelogrammlenker und in einer äußeren Stellung durch eine starre Verstrebung. Auch hier treten die bekannten Nachteile durch das Fehlen der Betätigungsvorrichtung für das Verschwenken der Hilfsrahmen auf.

Aus der DE-C-1 078 750 ist ein spurbreitenveränderliches Fahrwerk mit einem Hauptrahmen und an dem Hauptrahmen über Parallelogrammlenker verschwenkbar gelagerten Hilfsrahmen bekannt. Zum Erleichtern des Verschwenkens der Hilfsrahmen sind diese gegenüber der Längsrichtung des Fahrwerks nach außen angestellt ausgerichtet. Durch Vorwärts bzw. Rückwärtsfahren des Fahrwerks wird so eine Auf- bzw. Einschwenkbewegung der Hilfsrahmen hervorgerufen. Zur Fixierung der Hilfsrahmen gegenüber dem Hauptrahmen wird auf nicht näher erläuterte Sperrglieder verwiesen. Im übrigen erweist sich die Anstellung der Hilfsrahmen als ungeeignetes Mittel, die Hilfsrahmen zur Spurbreitenveränderung des Fahrwerks gezielt zu verschwenken.

Aus der DE-A-20 47 480 ist ein spurbreitenveränderliches Fahrwerk mit einem Hauptrahmen und zwei über Führungsstangen seitlich an dem Hauptrahmen gelagerten Hilfsrahmen bekannt. Die Fuhrungsstangen lassen sich zur Vergrößerung der Spurbreite teilweise aus dem Hauptrahmen herausziehen. Hierzu ist für jeden Hilfsrahmen eine hydraulische Betätigungsvorrichtung mit einem Hydraulikzylinder vorgesehen. In der Praxis erweist sich die Lagerung der Führungsstangen an dem Hauptrahmen als außerordentlich aufwendig.

Ein spurbreitenveränderliches Fahrwerk mit einem Hauptrahmen sowie zwei über Lenker an dem Hauptrahmen gelagerten und seitwärts verschwenkbaren Hilfsrahmen, wobei zum Verschwenken der Hilfsrahmen eine hydraulische Betätigungsvorrichtung vorgesehen ist, ist auch aus der DE-A-16 30 973 bekannt. Dabei sind für jeden der beiden Hilfsrahmen vier gleichlange Lenker vorgesehen. Die Lenker sind paarweise in Reihe hintereinander angeordnet. Jedes Lenkerpaar ist einerseits an dem Hauptrahmen und andererseits an dem jeweiligen Hilfsrahmen angelenkt. An den beiden inneren Schwenkachsen der beiden jeweils einem Hilfsrahmen zugeordneten Lenkerpaare greift ein Hydraulikzylinder an. So bewegen sich beim Einfahren des Hydraulikzylinders die inneren Schwenkachsen der Lenkerpaare aufeinander zu, woraus eine Bewegung des Hilfsrahmens auf den Hauptrahmen hin resultiert, bis er in einer inneren Transportstellung an dem Hauptrahmen anschlägt. Eine äußere Arbeitsstellung wird durch Ausfahren des Hydraulikzylinders erreicht, bis die beiden Lenkerpaare vollständig gestreckt sind. In dieser Position weist der Hilfsrahmen den maximalen Abstand zum Hauptrahmen auf. Die Stellung der Lenkerpaare ist jedoch gegenüber in Fahrtrichtung einwirkenden Kräften äußerst instabil. Entsprechend müssen bei dem bekannten spurbreitenveränderlichen Fahrwerk die Hilfsrahmen in der Arbeitsstellung gegenüber dem Hauptrahmen verstrebt werden. Anderenfalls würden nicht nur die Hydraulikzylinder in der Arbeitsstellung erheblich belastet, sondern es träte auch bereits eine statische Instabilität auf.

Der Erfindung liegt die Aufgabe zugrunde ein spurbreitenveränderliches Fahrwerk der eingangs beschriebenen Art aufzuzeigen, das bei geringem konstruktiven Aufwand das gezielte Verschwenken der Hilfsrahmen gegenüber dem Hauptrahmen erlaubt. Weiterhin sollen nach dem Verschwenken die Hilfsrahmen gegenüber dem Hauptrahmen in einer äußeren Arbeitsstellung ohne zusätzliche Maßnahmen fixiert sein.

Erfindungsgemäß wird dies dadurch gelöst, daß die Koppeln 9 an einem Paar gegenüberliegender Parallelogrammlenker 6 angreifen, daß die Betätigungsvorrichtung einen Hydraulikzylinder aufweist, der in der Längsmittelebene des Fahrwerks angeordnet ist und an dem an einem Ende die beiden Koppeln angelenkt sind, daß die Koppeln in einer äußeren Arbeitsstellung der Hilfsrahmen einen Winkel von 180° bilden und daß die Parallelogrammlenker in der äußeren Arbeitsstellung einen Winkel < 180° bilden. Bei dem neuen Fahrwerk ist nur ein einziger Hydraulikzylinder notwendig, um die beiden Hilfsrahmen zu verschwenken. Weiterhin entfällt die Notwendigkeit, irgendwelche verschiebbaren Lager für die Koppeln an dem Hauptrahmen vorzusehen. Die notwendige Bewegung des Anlenkpunkts der Koppeln an dem einen Ende des Hydraulikzylinders in Längsrichtung ergibt sich vielmehr bereits aus der wechselseitigen Abstützung der Koppeln in Querrichtung. Der konstruktive Aufwand für das neue Fahrwerk beschränkt sich ausschließlich auf Schwenklager, wobei hinsichtlich deren Anzahl ein Minimum erreicht zu sein scheint. Der notwendige Hub des Hydraulikzylinders ist vorteilhaft dadurch begrenzt, daß die Koppeln an einem Paar gegenüberliegender Parallelogrammlenker angreifen und diese so als Übersetzungshebel genutzt werden. Beim Verschwenken der Hilfsrahmen gegenüber dem Hauptrahmen werden sich die Hilfsrahmen nur in den seltensten Fällen synchron bewegen. In der Regel wird die Bodenhaftung in den Bereichen der beiden Hilfsrahmen unterschiedlich sein, so daß ein Hilfsrahmen mit geringerem Kraftaufwand gegenüber dem Hauptrahmen verschwenkbar ist als der andere. Hieraus resultiert während des Verschwenkens ein Auswandern des Hydraulikzylinders aus der Längsmittelebene des Fahrwerks. Mit dem Erreichen der Endstellung kehrt der Hydraulikzylinder jedoch in die Längsmittelebene des Fahrwerks zurück. Wenn die Koppeln in der Arbeitsstellung des Fahrwerks derart ausgerichtet sind, daß sie einen Winkel von 180° bilden, liegen ihr Anlenkpunkt an dem Hydraulikzylinder und ihre Angreifpunkte an dem Paar gegenüberliegender Parallelogrammlenker auf einer Geraden. Sie formen also ein gestrecktes Kniegelenk, bei dem sich die am einen Hilfsrahmen auftretenden Kräfte nicht auf die Betätigungsvorrichtung übertragen, sondern an dem anderen Hilfsrahmen abgestützt werden. Aus der Anordnung der Parallelogrammlenker in der äußeren Arbeitsstellung in einem Winkel von weniger als 180° wird einerseits der durch die Parallelogrammlenker gegebene Schwenkbereich für die Hilfsrahmen gut ausgenutzt, andererseits ergibt sich eine hohe Stabilität des Fahrwerks in der Arbeitsstellung. Im Vergleich zum Stand der Technik ist die Orientierung der Parallelogrammlenker in der Arbeitsstellung des neuen Fahrwerks hingegen als eigentümlich zu bezeichnen, da dort die Parallelogrammlenker immer senkrecht zur Fahrtrichtung ausgerichtet sind und so einen Winkel von 180° bilden.

Der Hydraulikzylinder kann um sein anderes Ende verschwenkbar an dem Hauptrahmen gelagert sein. Im konstruktiv einfachsten Fall stützt sich der Hydraulikzylinder an dem Hauptrahmen ab, gegenüber dem er das Verschwenken der Hilfsrahmen bewirkt.

Vorteilhaft bilden die Parallelogrammlenker in der äußeren Arbeitsstellung einen Winkel von ca. 130°, wobei sich besonders günstige Hebelverhältnisse ergeben.

Der dem Hydraulikzylinder zugewandte Winkel zwischen den Koppeln kann in einer inneren Transportstellung der Hilfsrahmen < 180° sein. Beim Vergrößern dieses Winkels durch Kontraktion des Hydraulikzylinders schwenken die Hilfsrahmen nach außen. Die äußerste Stellung der Hilfsrahmen wird bei einem Winkel von 180° erreicht. Da der Winkel zwischen den Koppeln die auf die Hilfsrahmen nach außen wirkende Kraft bestimmt, sollte ein Mindestwinkel auch in der Transportstellung des Fahrwerks von vorzugsweise ca. 80° nicht unterschritten werden, um ein ausreichendes Schließ- bzw. Öffnungsmoment zu gewährleisten. Das Ausschwenken der Hilfsrahmen bei Kontraktion des Hydraulikzylinders ist zwar mit dem Nachteil verbunden, daß im Verhältnis zur Expansion nur eine kleinere Kraft durch den Hydraulikzylinder aufgebracht werden kann. Da der Hydraulikzylinder in der Arbeitsstellung des Fahrwerks jedoch keine Kräfte aufzunehmen hat, macht sich dies nicht negativ bemerkbar. Außerdem steht so zum Fixieren der Hilfsrahmen in der Transportstellung, in der der Hydraulikzylinder nicht entlastet ist, die maximale Haltekraft zur Verfügung.

In der inneren Transportstellung und der äußeren Arbeitsstellung der Hilfsrahmen können Anschläge für die Hilfsrahmen und Parallelogrammlenker an dem Hauptrahmen vorgesehen sein. Auch diese Anschläge dienen zur exakten Definition der Lage der Hilfsrahmen gegenüber dem Hauptrahmen in ihren zwei wesentlichen Relativstellungen. Als günstig erweist es sich, die der Transportstellung zugeordneten Anschläge an dem Hauptrahmen für die Hilfsrahmen vorzusehen und in der Arbeitsstellung die Parallelogrammlenker an dem Hauptrahmen anschlagen zu lassen.

Für den Hydraulikzylinder kann ein Sperrventil vorgesehen sein. Außerhalb der Phase des aktiven Verschwenkens der Hilfsrahmen wird die Verfahrbarkeit des Hydraulikzylinders nicht genutzt. Vielmehr soll er gerade keine Längenänderung vollziehen. Damit erweist es sich als günstig, wenn der Hydraulikzylinder durch ein Sperrventil unmittelbar blockiert werden kann.

Die Erfindung wird im folgenden anhand eines Ausführungsbeispiels näher erläutert und beschrieben. Es zeigen:

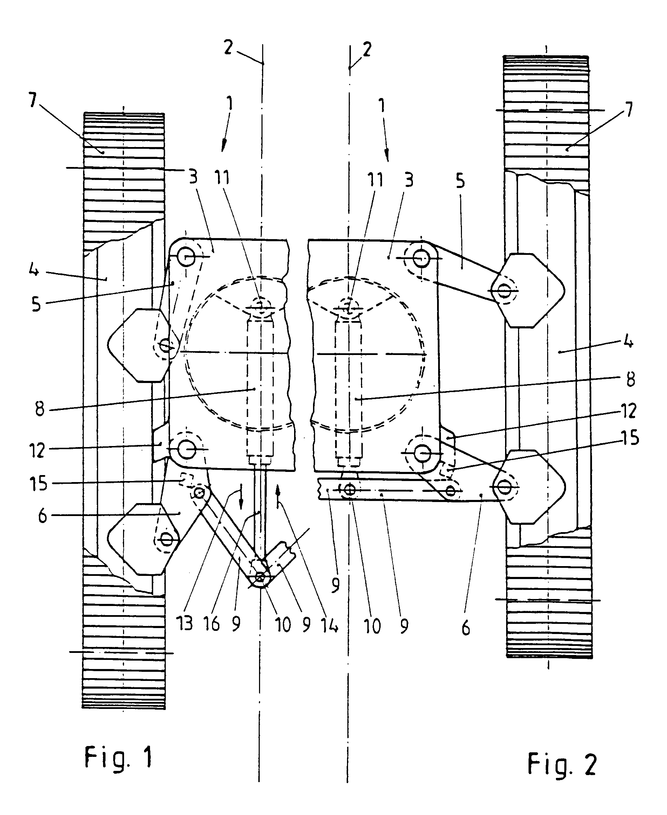

- Figuren 1 und 2: das Fahrwerk in einer Transport- und einer Arbeitsstellung.

Das in den Figuren 1 und 2 dargestellte Fahrwerk 1 ist spiegelsymmetrisch zu einer Längsmittelebene 2 ausgebildet. Dementsprechend ist das Fahrwerk 1 in den Figuren 1 und 2 jeweils etwas mehr als zur Hälfte wiedergegeben. Das Fahrwerk 1 weist einen Hauptrahmen 3 sowie zwei seitlich von dem Hauptrahmen 3 angeordnete Hilfsrahmen 4 auf, von denen hier jeweils nur einer dargestellt ist. Die Hilfsrahmen 4 sind über Parallelogrammlenker 5 und 6 verschwenkbar an dem Hauptrahmen 3 gelagert. Durch das Verschwenken der Hilfsrahmen 4 wird die Spurbreite des Fahrwerks 1 verändert. Die Hilfsrahmen 4 sind hier als Träger für Raupenbänder 7 ausgebildet. Sie könnten jedoch genausogut beispielsweise jeweils ein Radpaar tragen. Zum Verschwenken der Hilfsrahmen von einer in Figur 1 dargestellten Transportstellung mit geringer Spurbreite in eine in Figur 2 dargestellte Arbeitsstellung mit großer Spurbreite ist ein Hydraulikzylinder 8 vorgesehen. Der Hydraulikzylinder 8 ist in der Längsmittelebene 2 des Fahrwerks 1 angeordnet, wobei zwei Koppeln 9 an seinem einen Ende 10 angelenkt sind und sein anderes Ende 11 verschwenkbar an dem Hauptrahmen 3 gelagert ist. Die Koppeln 9 greifen ihrerseits an den sich gegenüberliegenden Parallelogrammlenkern 6 an. So wirkt der Hydraulikzylinder über die Koppeln 9 und die Parallelogrammlenker 6 auf die Hilfsrahmen 4 ein, wobei die Parallelogrammlenker 6 als Übersetzungshebel wirken. In der Transportstellung gemäß Figur 1 liegen die Hilfsrahmen 4 an Anschlägen 12 an, die am Hauptrahmen 3 ausgebildet sind. In dieser Position werden die Hilfsrahmen 4 durch den Hydraulikzylinder 8 gehalten. Der Hydraulikzylinder 8 beaufschlagt die Koppeln 9 in Richtung des Pfeils 13 und zieht so die Hilfsrahmen 4 an die Anschläge 12. In der Transportstellung weisen die Koppeln 9 einen dem Hydraulikzylinder 8 zugekehrten Winkel von ca. 80° auf. Durch diesen Winkel wird bestimmt, welcher Anteil der durch den Hydraulikzylinder aufgebrachten Kraft in senkrechter Richtung zur Längsmittelebene 2 auf die Parallelogrammlenker 6 und auf die Hilfsrahmen 4 einwirkt. Zum Verschwenken der Hilfsrahmen 4 wird der Hydraulikzylinder 8 so angesteuert, daß er kontrahiert, also die Koppeln 9 in Richtung des Pfeils 14 auf sein anderes Ende 11 zu bewegt. Hierbei werden die Parallogrammlenker 6 nach außen gedrückt, bis sie über Fortsätze 15 an den Anschlägen 12 anschlagen. Gleichzeitig erreichen die Koppeln 9 einen Winkel von 180°, bei dem sie auf einer Geraden angeordnet sind. So wirken keinerlei Rückstellkräfte auf den Hydraulikzylinder 8 ein. Alle von einem Hilfsrahmen 4 übertragenen Kräfte werden vielmehr auf den anderen Hilfsrahmen 4 abgeleitet. Die Koppeln 9 bilden in der Arbeitsstellung des Fahrwerks 1 demgemäß ein gestrecktes Kniegelenk. Wie aus Figur 2 ersichtlich, sind die Parallelogrammlenker 5, 6 in der Arbeitsstellung des Fahrwerks 1 nicht senkrecht zu der Längsmittelebene 2 ausgerichtet. Statt dessen bilden sie einen Winkel von ca. 130°. Hieraus resultiert, daß die Koppeln die Relativlage der Hilfsrahmen 4 zu dem Hauptrahmen 3 mit einem deutlich günstigeren Hebelverhältnis abstützen können, als dies bei senkrecht zur Längsmittelebene 2 ausgerichteten Parallelogrammlenkern 5, 6 der Fall wäre. Dennoch wird die Länge der Parallelogrammlenker 5, 6 weitgehend zum Erreichen einer großen Spurbreite ausgenutzt. Um das Verschwenken der Hilfsrahmen 4 gegenüber dem Hauptrahmen 3 zu erleichtern, kann ein Raupenband 7 beispielsweise mit einem Arbeitswerkzeug einer Baumaschine, an der das Fahrwerk 1 vorgesehen ist, ausgehoben werden. Auch das Verschwenken der Hilfsrahmen 4 bei fahrendem Fahrwerk 1 reduziert die sonst durch den Hydraulikzylinder 3 zu überwindende Reibung. Wenn diese Reibung bei beiden Raupenbändern 7 unterschiedlich ist, wandert das eine Ende 10 des Hydraulikzylinders 8 zu Beginn des Verschwenkens der Hilfsrahmen 4 in Richtung der geringeren Reibung aus. Anschließend kehrt der Hydraulikzylinder 8 jedoch in seine Position in der Längsmittelebene 2 zurück. In der Arbeitsstellung erweist sich die vollständige Kontraktion des Hydraulikzylinders 8 insofern als sinnvoll, als daß die Kolbenstange 16 keiner Beschädigungsgefahr ausgesetzt ist. Die kompakte Baulänge des Hydraulikzylinders 8 und der Koppeln 9 bei der Ausführungsform des Fahrwerks 1 gemäß den Figuren 1 und 2 ist deshalb realisierbar, weil die Koppeln 9 an den Parallelogrammlenkern 6 angreifen und über diese auf die Hilfsrahmen 4 einwirken. Hieraus ergibt sich für die Längenänderung des Hydraulikzylinders 8 eine positive Übersetzung.

## Patentansprüche

1. Spurbreitenveränderliches Fahrwerk mit einem Hauptrahmen sowie zwei, jeweils über Parallelogrammlenker (6) seitlich an dem Hauptrahmen (3) gelagerten und seitwärts verschwenkbaren Hilfsrahmen, wobei zum Verschwenken der Hilfsrahmen (4) eine hydraulische Betätigungsvorrichtung (8) vorgesehen ist, die jeweils über eine Koppel (9) auf die Hilfsrahmen einwirkt, dadurch gekennzeichnet, daß die Koppeln (9) an einem Paar gegenüberliegender Parallelogrammlenker (6) angreifen, daß die Betätigungsvorrichtung einen Hydraulikzylinder (8) aufweist, der in der Längsmittelebene (2) des Fahrwerks (1) angeordnet ist und an den an einem Ende (10) die beiden Koppeln (9) angelenkt sind, daß die Koppeln (9) in einer äußeren Arbeitsstellung der Hilfsrahmen (4) einen Winkel von 180° bilden und daß die Parallelogrammlenker (5, 6) in der äußeren Arbeitsstellung einen Winkel < 180° bilden.

2. Spurbreitenveränderliches Fahrwerk nach Anspruch 1, dadurch gekennzeichnet, daß der Hydraulikzylinder (8) um sein anderes Ende (11) verschwenkbar an dem Hauptrahmen (3) gelagert ist.

3. Spurbreitenveränderliches Fahrwerk nach Anspruch 1, dadurch gekennzeichnet, daß die Parallelogrammlenker (5, 6) in der äußeren Arbeitsstellung einen Winkel von ca. 130° bilden.

4. Spurbreitenveränderliches Fahrwerk nach einem der Ansprüche 1 bis 3, dadurch gekennzeichnet, daß der dem Hydraulikzylinder (8) zugewandte Winkel zwischen den Koppeln (9) in einer inneren Transportstellung der Hilfsrahmen (4) < 180° ist.

5. Spurbreitenveränderliches Fahrwerk nach Anspruch 4, dadurch gekennzeichnet, daß der dem Hydraulikzylinder (8) zugewandte Winkel zwischen den Koppeln (9) in einer inneren Transportstellung der Hilfsrahmen (4) ca. 80° beträgt.

6. Spurbreitenveränderliches Fahrwerk nach einem der Ansprüche 1 bis 5, dadurch gekennzeichnet, daß in der inneren Transportstellung und der äußeren Arbeitsstellung der Hilfsrahmen (4) Anschläge (12) für die Hilfsrahmen (4) und die Parallelogrammlenker (5, 6) an dem Hauptrahmen (3) vorgesehen sind.

7. Spurbreitenveränderliches Fahrwerk nach einem der Ansprüche 1 bis 6, dadurch gekennzeichnet, daß für den Hydraulikzylinder (8) ein Sperrventil vorgesehen ist.

## Claims

1. Variable gauge running gear comprising a main frame and two additional frames supported by parallel bars (6) arranged in bearings on the side of the main frame (3) and pivotably mounted, wherein a hydraulic control device (8) is provided for pivoting movement of the additional frames (4), acting upon the additional frames via a coupler bar (9) each, **whereby** the coupler bars (9) are connected with a pair of parallel bars (6) located on opposite sides, the hydraulic control device comprises a hydraulic cylinder (8) located in the longitudinal center plane (2) of the running gear (1) and to which the two coupler bars (9) are connected on one end portion (10), the coupler bars (9) in an outer working position of the additional frames (4) form an angle of 180° to each other and the parallel bars (5, 6) in the outer working position form an angle < 180°.

2. The variable gauge running gear of claim 1, **whereby** the hydraulic cylinder (8) is pivotably mounted with its other end portion (11) on the main frame (3).

3. The variable gauge running gear of claim 1, **whereby** the parallel bars (5, 6) in the outer working position form an angle of about 130°.

4. The variable gauge running gear of one of the claims 1 to 3, **whereby** in an inner transport position of the additional frames (4) the angle between the coupler bars (9) facing the hydraulic cylinder (8) is < 180°.

5. The variable gauge running gear of claim 4, **whereby** in the inner transport position of the additional frames (4) the angle between the coupler bars (9) facing the hydraulic cylinder (8) is about 80°.

6. The variable gauge running gear of one of the claims 1 to 5, **whereby** in the inner transport position and in the outer working position of the additional frames (4) stops (12) for the additional frames (4) and the parallel bars (5, 6) are provided on the main frame (3).

7. The variable gauge running gear of one of the claims 1 to 6, **whereby** a shut-off valve is provided for the hydraulic cylinder (8).

## Revendications

1. Châssis roulant à écartement variable comportant un cadre principal ainsi que deux cadres auxiliaires montés chacun par des bras oscillants de parallélogramme (6) sur le côté du cadre principal (3) et pivotant sur le côté, dans lequel, pour le pivotement des cadres auxiliaires (4) il est prévu un dispositif d'actionnement hydraulique (8), qui agit par une bielle (9) sur les cadres auxiliaires, caractérisé en ce que les bielles (9) agissent sur une paire de bras oscillants de parallélogramme (6) opposés l'un à l'autre, en ce que le dispositif d'actionnement comporte un vérin hydraulique (8), qui est placé dans le plan médian longitudinal (2) du châssis roulant (1) et auquel s'articule à une extrémité (10), les deux bielles (9), en ce que les deux bielles (9) forment, dans une position de travail extérieure des cadres auxiliaires (4), un angle de 180° et en ce que les bras oscillants de parallélogramme (5, 6) forment un angle < 180° dans la position de travail extérieure.

2. Châssis roulant à écartement variable selon la revendication 1, caractérisé en ce que le vérin hydraulique (8) est monté sur le cadre principal (3) de manière à pouvoir pivoter autour de son autre extrémité (11).

3. Châssis roulant à écartement variable selon la revendication 1, caractérisé en ce que les bras oscillants de parallélogramme (5, 6) forment un angle d'environ 130° dans la position de travail extérieure.

4. Châssis roulant à écartement variable selon l'une des revendications 1 à 3, caractérisé en ce que l'angle tourné vers le vérin hydraulique (8) entre les bielles (9), dans une position de transport intérieure des cadres auxiliaires (4), est < 180°.

5. Châssis roulant à écartement variable selon la revendication 4, caractérisé en ce que l'angle tourné vers le vérin hydraulique (8) entre les bielles (9) est de 80° environ dans une position de transport intérieure des cadres auxiliaires (4).

6. Châssis roulant à écartement variable selon l'une des revendications 1 à 5, caractérisé en ce que dans la position de transport intérieure et la position de travail extérieure des cadres auxiliaires (4), des butées (12) pour les cadres auxiliaires (4) et les bras oscillants de parallélogramme (5, 6), sont prévues sur le cadre principal (3).

7. Châssis roulant à écartement variable selon l'une des revendications 1 à 6, caractérisé en ce qu'il est prévu une soupape de blocage pour le vérin hydraulique (8).
